# EUROPEAN PATENT SPECIFICATION

(11) **EP 1 740 772 B1**
(45) Date of publication and mention of the grant of the patent: **30.03.2016**
(21) Application number: 05736198.2
(22) Date of filing: 26.04.2005
(51) Int. Cl.: E01B 19/00, E01F 7/02

(54) **WIND AND SNOW PROTECTION FOR RAILWAY TRACK**
WIND- UND SCHNEESCHUTZ FÜR GLEISE
PROTECTION CONTRE LE VENT ET LA NEIGE POUR LIGNE DE CHEMIN DE FER

(30) Priority: 27.04.2004 SE 0401087
(43) Date of publication of application: 10.01.2007
(73) Proprietor: Osborn International AB, S-561 23 Huskvarna (SE)
(72) Inventor: ERNSTAD, Björn, S-574 39 Vetlanda (SE)
(74) Representative: Awapatent AB
(86) International application number: PCT/SE2005/000608
(87) International publication number: WO 2005/103384

(56) References cited:
- WO-A1-01/66859
- JP-A- 2000 257 025
- SE-C2- 525 561
- US-A- 3 233 097
- US-A- 3 312 820
- US-A- 4 671 475
- DATABASE WPI Week 199622, Derwent Publications Ltd., London, GB; AN 1996-217585, XP003003445 & JP 08 081 903 A (HIGASHI NIPPON RYOKYAKU TETSUDO KK) 26 March 1996

## Description

### Technical field

The present invention relates to a wind and snow or sand protection, which is designed to be fitted along one side of a rail in a railway track.

### Background of the invention

In a known method of preventing icing in a set of points on a railway track the points are heated up by means of an electrical heating system, which is controlled by a temperature sensor and a precipitation gauge. The heating is regulated according to the temperature and the precipitation. One problem with this heating system is that the system which regulates the heating does not always manage to detect the weather correctly. The precipitation gauge, for example, functions poorly in high winds, and sometimes the heating system does not manage to heat the points satisfactorily, for example in the event of driven snow with ensuing drifting.

In an attempt to improve the working of the heating system, tarpaulins or inclined plywood boards have been placed alongside the points. This attempt has proved impractical, however. Both the tarpaulins and the boards impede repair work, and whilst not fulfilling their function satisfactorily they still require inspection and maintenance.

Devices to protect a railway track against air flow by means of deflecting members are known for instance from WO 01/66859 A1.

### Summary of the invention

The object of the invention is therefore to provide a wind and snow protection for fitting along a rail in a railway track, which will effectively reduce the formation of snow drifts along the rail and which can thereby suitably be used to complement an existing heating system of the type described above.

According to the invention this object is achieved by a wind and snow protection which is of the type specified in the introductory part and which comprises a flexible strip arrangement having a fixing part and a flexible screen projecting therefrom, which forms a curtain, which extends along the fixing part and which is sized and adapted, when the flexible strip arrangement is in use, to extend upwards from the fixing part.

The flexible screen further comprises a first screen, which projects from the fixing part in a first direction, and a second screen, which projects from the fixing part in a second, opposite direction to the first direction.

In particular, the flexible strip arrangement may comprise two separate flexible strips, each having a fixing strip and a respective screen projecting therefrom, one flexible strip comprising said first screen and the other flexible strip comprising said second screen, and the fixing strips of the two flexible strips being connected to one another in order to form the fixing part of the flexible strip arrangement.

According to the invention, the first and second screens referred to above are formed of first and second sets of bristles, respectively.

Providing the protection with a flexible screen, which forms a curtain along the rail, affords a flexible protection which effectively prevents or at least substantially reduces the cooling effect of the wind on the rail and the formation of snow drift-up against the rail.

The flexible strip arrangement may be sized and adapted such that it, in use, extends at least up to the level of the upper surface of the rail.

Alternatively, the flexible curtain may be sized and adapted such that it, in use, extends beyond the upper surface of the rail.

The flexible curtain may be sized and adapted, when the flexible strip arrangement is in use, to cover the entire height of the rail.

Furthermore, the fixing strips may be clamped between pairs of fixing elements, one fixing element in each pair being designed for fitting to a railway track sleeper by means of a rail bolt situated in the railway track.

This means that no additional fitting equipment is needed when the brush strips are to be fitted.

The flexible screen may advantageously be made of polymer material, such as polypropylene and/or polyester. Screens of these materials have sufficient durability, elasticity and rigidity to withstand the aerodynamic speed pressure and the mechanical wear and tear that can result from rail traffic. Screens of polymer can be made flexible and are capable of bending out of the way in response to traffic on the railway track. Screens made from polyester have proved particularly durable and are therefore especially suited to use as screens directed vertically upwards. Other elastic and preferably also resilient materials are not excluded.

In one embodiment, the flexible strip arrangement comprises a brush strip arrangement, wherein the fixing part comprises a batten, and wherein the flexible screen is formed by bristles.

The fixing part may be made of a polymer material, or it may be made of a metallic material, such as galvanized steel or stainless steel.

In further embodiments, the flexible screen may comprise a membrane, or be provided in the form of a fin seal. Such an embodiment may act so as to render the screen less permeable.

The membrane or fin seal may be continuous along the fixing part, or it may be formed by a plurality of membrane segments arranged along the fixing part. The membrane or fin seal may be made from a polymer material.

The invention also relates to the use of a flexible strip as wind and snow or sand protection next to a rail in a railway track.

### Brief description of the drawings

The invention will be described in more detail below with reference to drawings attached.
Fig. 1 is a side view and shows a section of a wind and snow protection according to the invention fitted along one side of a rail in a railway track.
Fig. 2 is an enlarged cross-sectional view along the line I-I in Fig. 1.
Fig. 3 is a perspective view and shows a section of the wind and snow protection in Fig. 1 and 2.
Fig. 4 is a sectional view showing another embodiment of the wind and snow protection.
Fig. 5 is a sectional view showing yet another embodiment of the wind and snow protection.

### Description of a preferred embodiment

The wind and snow protection will now be described with reference to an embodiment wherein the flexible screen is provided in the form of a brush arrangement.

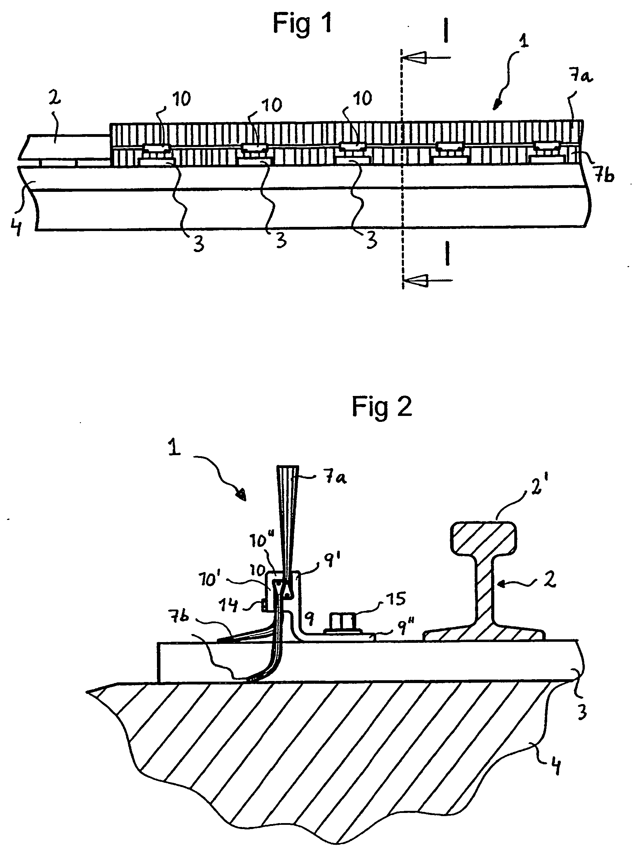

Figs 1 and 2 show a wind and snow protection comprising a brush strip arrangement 1 according to the present invention fitted along the outside of a rail 2, which forms part of a railway track and rests on sleepers 3 on a roadbed 4. The brush strip arrangement 1 extends parallel to the rail 2 and is fixed to the sleepers 3 in a manner described in more detail below.

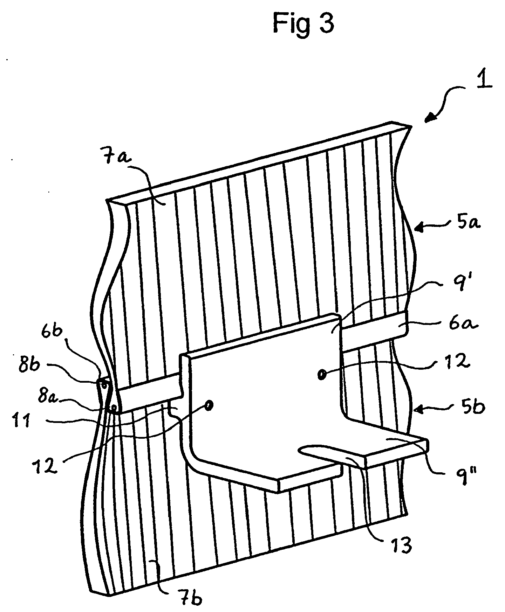

The brush strip arrangement 1 comprises two separate brush strips, that is an upper brush strip 5a and a lower brush strip 5b. The upper brush strip 5a has a fixing strip 6a and bristles 7a projecting therefrom, and the lower brush strip 5b has a fixing strip 6b and bristles 7b projecting therefrom (see Fig. 2 and 3). The bristles 7a, 7b form a bristle curtain which extends along the respective fixing strip 6a, 6b. The bristles 7a of the upper brush strip 5a extend largely vertically upwards to a level above the upper surface 2' of the rail 2.

The brush strips 5a, 5b are manufactured by a known method by bending approximately 30-cm long bristles 7a, 7b in the middle around a tie wire 8a, 8b and bending fixing strips 6a, 6b around the tie wire 8a, 8b and pinching them so that each fixing strip 6a, 6b acquires a largely triangular shape. The bristles 7a, 7b are preferably made of polymer material, such as polypropylene and/or polyester. The bristles 7a in the upper brush strip 5a are preferably made of polyester, which gives relatively stiff bristles which are durable. The bristles 7b in the lower brush strip 5b, which extend in the opposite direction to the bristles 7a in the upper brush strip 5a, are preferably made of polypropylene, which gives softer bristles, which can provide a seal against the sleepers 3 and the roadbed 4.

The fixing strips 6a, 6b are preferably made of galvanized sheet metal or other durable material.

The fixing strips 6a, 6b are clamped between multiple pairs of fixing elements 9, 10. One fixing element 9 in each pair is a substantially L-shaped aluminium profile section having a vertical leg 9' and a horizontal leg 9". The vertical leg 9' is formed with a longitudinal heel 11, against the upper side of which the fixing strip 6a rests. The vertical leg 9' is further provided with two tapped, horizontal through holes 12 (see Fig. 3), which extend through the heel 11. The horizontal leg 9" of the fixing element 9 has a slot 13, which extends a short distance into the leg from its free end.

The second fixing element 10 in each pair is a substantially L-shaped aluminium profile section having a vertical leg 10' and a horizontal leg 10", against the underside of which the fixing strip 6b rests. The vertical leg 10' is provided with two horizontal through-holes (not shown), corresponding to the holes 12 in the vertical leg 9' of the fixing element 9. Two stainless steel screws 14 each extend through the holes in the fixing element 10 and are each screwed into the holes 12 in the fixing element 9, in order to clamp the fixing strips 6a, 6b firmly between the fixing elements 9, 10. The fixing strips 6a, 6b thereby together form a fixing batten.

The brush strip arrangement 1 is fixed to the sleepers 3 by means of the fixing elements 9, which rest against the sleepers 3 with their horizontal legs 9". Rail bolts 15 situated on the railway track for fixing the rail 2 to the sleepers 3 (not shown further) extend through the slot 13 in each fixing element leg 9" in order to fix the brush strip arrangement 1 to the sleepers 3.

The wind and snow protection can be modified in many different ways without departing from the scope of the patent claims below. The brush strip arrangement 1, for example, need not comprise two brush strips 5a, 5b but may in certain applications consist solely of one brush strip corresponding to the upper brush strip 5a, which is fitted along the rail 2. The bristles in the brush strip can be made so long that they cover the entire height of the rail 2, or merely a part thereof.

The fixing batten need not comprise two fixing strips 6a, 6b but may comprise a common fixing batten from which both a first set of bristles, corresponding to the bristles 7a, and a second set of bristles, corresponding to the bristles 7b, project outwards.

The wind and snow protection according to the invention may be fitted on both sides of a rail 2 in a railway track so as to create a yet more effective protection.

The bristles 7a, 7b may be made of natural material, such as coconut fibres, or other materials suited to the purpose.

The wind and snow protection according to the invention can also be used as protection against sand that is blown up and forms sand drifts against a rail.

In one embodiment, the screen may be continuous along the fixing part, whereas in another embodiment it may be made up from a plurality of partial screen portions, arranged along the fixing part.

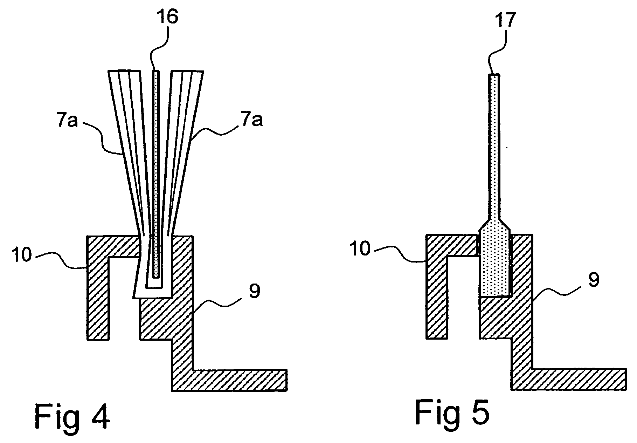

According to an alternative embodiment, illustrated by Fig. 4, the flexible screen may comprise a membrane 16. Such a membrane may be provided as a complement to the bristles, and it may extend upwards from the fixing part to provide substantially the same effect as the bristles described above. One advantage of such a membrane may be that the bristle screen is made less permeable.

In one another alternative embodiment, shown in Fig. 5, the screen may be provided in the form of a molded fin seal 17, e.g. made from a polymer material, such as rubber, thermoplastic material, a thermoplastic elastomer etc.

A membrane 16 may be arranged between sets of bristles as illustrated in Fig. 4. Such a membrane is fairly easy to provide, since it can be clamped between the folded-together sets of bristles.

In yet another embodiment, the screen may be provided in the form of a textile or textile-reinforced member (similar to the molded fin seal) having sufficient rigidity to extend upwards from the fixing part 9, 10.

It is also possible to replace the membrane of Fig. 4 with the fin seal of Fig. 5. In either of the embodiments, the fin seal or the membrane may be continuous or made up from fin seal/membrane segments arranged along the fixing part 9, 10.

It is also possible to provide combinations of brush, brush + membrane and fin seal screens. For example, one of the screens 7a, 7b indicated in Fig. 2 may be of a first type and the other one may be of a second type.
It is realized that although Figs 4 and 5 only show the upper screens 7a, lower screens 7b may also be provided and may be of the same type of the respective upper screen or may be of any type shown in this document.

## Claims

1. Wind and snow protection which is designed to be fitted along one side of a rail (2) in a railway track, the protection comprising a flexible strip arrangement (1) having a fixing part (6a, 6b) and a flexible screen (7a, 7b) projecting therefrom, which forms a curtain, which extends along the fixing part (6a, 6b) and which is sized and adapted, when the strip arrangement (1) is in use, to extend upwards from the fixing part (6a, 6b), **characterized in that** the flexible screen (7a, 7b) comprises a first screen (7a), which projects from the fixing part (6a, 6b) in a first direction, and a second screen (7b), which projects from the fixing part (6a, 6b) in a second, opposite direction to the first direction, and **in that** said first and second screens (7a, 7b) are formed of first and second sets of bristles, respectively.

2. The protection as claimed in claim 1, wherein the flexible strip arrangement is sized and adapted such that it, in use, extends at least up to the level of the upper surface (2') of the rail (2).

3. The protection according to claim 1 or 2, wherein the flexible curtain is sized and adapted such that it, in use, extends beyond the upper surface of the rail (2).

4. The protection according to claim 1, wherein the flexible curtain is sized and adapted such that it, in use, covers the entire height of the rail (2).

5. The protection according to any one of the preceding claims, wherein the flexible strip arrangement, when fitted along the outside of a rail, extends parallel to the rail and is fixed to railway track sleepers.

6. The protection according to claim 1, wherein the flexible strip arrangement (1) comprises two separate flexible strips (5a, 5b), each having a fixing strip (6a, 6b) and a respective screen (7a, 7b) projecting therefrom, one flexible strip (5a) comprising said first screen (7a) and the other flexible strip (5b) comprising said second screen (7b), and the fixing strips (6a, 6b) of the two flexible strips (5a, 5b) being connected to one another in order to form the fixing part (6a, 6b) of the flexible strip arrangement (1).

7. The protection according to claim 6, wherein the fixing strips (6a, 6b) are clamped between pairs of fixing elements (9, 10), one fixing element (9) in each pair being designed for fitting to a railway track sleeper (3) by means of a rail bolt (15) situated in the railway track.

8. The protection according to any one of the preceding claims, wherein the flexible strip arrangement comprises a brush strip arrangement (1), wherein the fixing part comprises a batten (6a, 6b), and wherein the flexible screen is formed by bristles (7a, 7b).

9. The protection according to any one of the preceding claims, wherein the screen (7a, 7b) is made of polymer material, such as polypropylene and/or polyester.

10. The protection as claimed in any one of the preceding claims, wherein the fixing part (6a, 6b) is made of a polymer material.

11. The protection according to any one of claims 1-9, wherein the fixing part (6a, 6b) is made of a metallic material, such as galvanized steel or stainless steel.

12. The protection as claimed in any one of the preceeding claims, wherein the flexible screen comprises a membrane (16).

13. The protection as claimed in claim 12, wherein the membrane (16) is continuous along the fixing part.

14. The protection as claimed in claim 12, wherein the membrane (16) is formed by a plurality of membrane segments arranged along the fixing part.

15. The protection as claimed in any one of claims 12-14, wherein the membrane (16) is made from a polymer material.

16. The protection as claimed in any one of claims 1-11, wherein the flexible screen (7a, 7b) comprises a fin seal (17).

17. The protection as claimed in claim 16, wherein the fin seal (17) is continuous along the fixing part.

18. The protection as claimed in claim 16, wherein the fin seal(17) is formed by a plurality of fin seal segments arranged along the fixing part.

19. Use of a flexible strip arrangement (1) according to any of claims 1-18 as wind and snow or sand protection against a rail (2) in a railway track.

## Patentansprüche

1. Wind- und Schneeschutz, welcher so gestaltet ist, um entlang einer Seite einer Schiene (2) in einem Eisenbahngleis montiert zu werden, wobei der Schutz eine flexible Streifenanordnung (1) mit einem Befestigungsteil (6a, 6b) und mit einem davon vorragenden flexiblen Schirm (7a, 7b) umfasst, der einen Vorhang bildet, welcher sich entlang des Befestigungsteils (6a, 6b) erstreckt und so dimensioniert und ausgelegt ist, um sich, wenn die Streifenanordnung (1) in Gebrauch ist, nach oben von dem Befestigungsteil (6a, 6b) zu erstrecken, **dadurch gekennzeichnet, dass** der flexible Schirm (7a, 7b) einen ersten Schirm (7a), der von dem Befestigungsteil (6a, 6b) in einer ersten Richtung vorragt, und einen zweiten Schirm (7b) umfasst, der vom Befestigungsteil (6a, 6b) in eine zweite, entgegengesetzte Richtung zur ersten Richtung vorragt, und dass der erste und der zweite Schirm (7a, 7b) aus ersten und zweiten Gruppen von Borsten ausgebildet sind.

2. Schutz nach Anspruch 1, wobei die flexible Streifenanordnung so dimensioniert und ausgelegt ist, dass sie sich im Gebrauch zumindest bis zur Ebene der Oberseite (2') der Schiene (2) erstreckt.

3. Schutz nach Anspruch 1 oder 2, wobei der flexible Vorhang so bemessen und ausgelegt ist, dass er sich im Gebrauch über die obere Oberfläche der Schiene (2) erstreckt.

4. Schutz nach Anspruch 1, wobei der flexible Vorhang so bemessen und ausgelegt ist, dass er im Gebrauch die gesamte Höhe der Schiene (2) abdeckt.

5. Schutz nach einem der vorhergehenden Ansprüche, wobei die flexible Streifenanordnung, wenn sie entlang der Außenseite einer Schiene angebracht ist, sich parallel zur Schiene erstreckt und auf den Eisenbahngleisschwellen befestigt wird.

6. Schutz nach Anspruch 1, wobei die flexible Streifenanordnung (1) zwei getrennte, flexible Streifen (5a, 5b) mit jeweils einem Befestigungsstreifen (6a, 6b) und einem jeweiligen Schirm (7a, 7b) umfasst, welche daraus vorragen, wobei ein flexibler Streifen (5a) den ersten Schirm (7a) umfasst und der andere flexible Streifen (5b) den zweiten Schirm (7b) umfasst und die Befestigungsstreifen (6a, 6b) der beiden flexiblen Streifen (5a, 5b) miteinander verbunden sind, um zu den Befestigungsteil (6a, 6b) der flexiblen Streifenanordnung (1) auszubilden.

7. Schutz nach Anspruch 6, wobei die Befestigungsstreifen (6a, 6b) zwischen Paaren von Befestigungselementen (9, 10) geklemmt sind, wobei ein Befestigungselement (9) in jedem Paar zur Montage an einer Eisenbahngleisschwelle (3) mittels eines Schienenbolzen (15), der im Eisenbahngleis angeordnet ist, ausgelegt ist.

8. Schutz nach einem der vorhergehenden Ansprüche, wobei die flexible Streifenanordnung eine Bürstenstreifenanordnung (1) umfasst, wobei das Befestigungsteil eine Leiste (6a, 6b) aufweist und wobei der flexible Schirm durch Borsten (7a, 7b) ausgebildet wird.

9. Schutz nach einem der vorhergehenden Ansprüche, wobei der Schirm (7a, 7b) aus Polymermaterial wie Polypropylen und/oder Polyester hergestellt ist.

10. Schutz nach einem der vorhergehenden Ansprüche, wobei das Befestigungsteil (6a, 6b) aus einem Polymermaterial hergestellt ist.

11. Schutz nach einem der Ansprüche 1 - 9, wobei das Befestigungsteil (6a, 6b) aus einem metallischen Material wie beispielsweise verzinkter Stahl oder Edelstahl hergestellt ist.

12. Schutz nach einem der vorhergehenden Ansprüche, wobei der flexible Schirm eine Membran (16) umfasst.

13. Schutz nach Anspruch 12, wobei die Membran (16) durchgehend entlang des Befestigungsteils verläuft.

14. Schutz nach Anspruch 12, wobei die Membran (16) durch eine Vielzahl von Membransegmenten, welche entlang des Befestigungsteils angeordnet sind, ausgebildet ist.

15. Schutz nach einem der Ansprüche 12 - 14, wobei die Membran (16) aus einem Polymermaterial hergestellt ist.

16. Schutz nach einem der Ansprüche 1 - 11, wobei der flexible Schirm (7a, 7b) eine Lamellendichtung (17) aufweist.

17. Schutz nach Anspruch 16, wobei die Lamellendichtung (17) kontinuierlich entlang des Befestigungsteils verläuft.

18. Schutz nach Anspruch 16, worin die Lamellendichtung (17) durch eine Vielzahl von Lamellendichtungssegmenten, welche entlang dem Befestigungsteil angeordnet sind, ausgebildet ist.

19. Verwendung einer flexiblen Streifenanordnung (1) nach einem der Ansprüche 1 - 18 als Wind- und Schnee- oder Sand-Schutz gegen eine Schiene (2) an einem Eisenbahngleis.

## Revendications

1. Protection contre le vent et la neige, qui est conçue pour être ajustée le long d'un côté d'un rail (2) dans une ligne de chemin de fer, cette protection comprenant un système de bande flexible (1) comportant une pièce de fixation (6a, 6b) et un écran flexible (7a, 7b) proéminent sur celle-ci, qui forme un rideau et qui s'étend le long de la pièce de fixation (6a, 6b) et est dimensionné et adapté pour, lorsque le système de bande (1) est en cours d'utilisation, s'étendre vers le haut depuis la pièce de fixation (6a, 6b), **caractérisée en ce que** l'écran flexible (7a, 7b) comprend un premier écran (7a) qui est proéminent sur la pièce de fixation (6a, 6b) dans un premier sens et un second écran (7b) qui est proéminent sur la pièce de fixation (6a, 6b) dans un second sens opposé au premier sens et que lesdits premier et second écrans (7a, 7b) sont formés respectivement de premier et second ensembles de soies.

2. Protection selon la revendication 1, dans laquelle le système de bande flexible est dimensionné et adapté de manière à ce que, en cours d'utilisation, il s'étende au moins jusqu'au niveau de la surface supérieure (2') du rail (2).

3. Protection selon la revendication 1 ou 2, dans laquelle le rideau flexible est dimensionné et adapté de manière à ce que, en cours d'utilisation, il s'étende au moins au-delà de la surface supérieure du rail (2).

4. Protection selon la revendication 1, dans laquelle le rideau flexible est dimensionné et adapté de manière à ce que, en cours d'utilisation, il couvre toute la hauteur du rail (2).

5. Protection selon l'une quelconque des revendications précédentes, dans laquelle le système de bande flexible, une fois ajusté le long de l'extérieur d'un rail, s'étend parallèlement au rail et est fixé à des traverses de chemin de fer.

6. Protection selon la revendication 1, dans laquelle le système de bande flexible (1) comprend deux bandes flexibles séparées (5a, 5b), comportant chacune une bande de fixation (6a, 6b) et un écran respectif (7a, 7b) proéminent sur celles-ci, une bande flexible (5a) comprenant ledit premier écran (7a) et l'autre bande flexible (5b) comprenant ledit second écran (7b) et les bandes de fixation (6a, 6b) des deux bandes flexibles (5a, 5b) étant connectées entre elles pour former la pièce de fixation (6a, 6b) du système de bande flexible (1).

7. Protection selon la revendication 6, dans laquelle les bandes de fixation (6a, 6b) sont serrées entre des paires d'éléments de fixation (9, 10), un élément de fixation (9) de chaque paire étant conçu pour s'ajuster sur une traverse de chemin de fer (3) au moyen d'un boulon de rail (15) situé dans la ligne de chemin de fer.

8. Protection selon l'une quelconque des revendications précédentes, dans laquelle le système de bande flexible comprend un système de bande de brossage (1), la bande de fixation comprenant un tasseau (6a, 6b) et l'écran flexible étant composé de soies (7a, 7b).

9. Protection selon l'une quelconque des revendications précédentes, dans laquelle l'écran (7a, 7b) est composé de matériau polymère, comme du polypropylène et/ou du polyester..

10. Protection selon l'une quelconque des revendications précédentes, dans laquelle la pièce de fixation (6a, 6b) est composée d'un matériau polymère.

11. Protection selon l'une quelconque des revendications 1 - 9, dans laquelle la pièce de fixation (6a, 6b) est composée d'un matériau métallique, comme de l'acier galvanisé ou de l'acier inoxydable.

12. Protection selon l'une quelconque des revendications précédentes, dans laquelle l'écran flexible comprend une membrane (16).

13. Protection selon la revendication 12, dans laquelle la membrane (16) est continue le long de la pièce de fixation.

14. Protection selon la revendication 12, dans laquelle la membrane (16) est formée d'une pluralité de segments de membrane disposés le long de la pièce de fixation.

15. Protection selon l'une quelconque des revendications 12 - 14, dans laquelle la membrane (16) est composée de matériau polymère.

16. Protection selon l'une quelconque des revendications 1 - 11, dans laquelle l'écran flexible (7a, 7b) comprend un joint à ailettes (17).

17. Protection selon la revendication 16, dans laquelle le joint à ailettes (17) est continu le long de la pièce de fixation.

18. Protection selon la revendication 16, dans laquelle le joint à ailettes (17) est formé d'une pluralité de segments de joint à ailettes disposés le long de la pièce de fixation.

19. Utilisation d'un système de bande flexible (1) selon l'une quelconque des revendications 1 - 18 comme protection contre le vent et la neige contre un rail (2) dans une ligne de chemin de fer.
